# EUROPÄISCHE PATENTSCHRIFT

(11) **EP 3 561 005 B1**
(45) Veröffentlichungstag und Bekanntmachung des Hinweises auf die Patenterteilung: **16.09.2020**
(21) Anmeldenummer: 18169447.2
(22) Anmeldetag: 26.04.2018
(51) Int. Cl.: C09D 5/00, C09D 7/00

(54) **WÄSSRIGE BESCHICHTUNGSMASSE**
AQUEOUS COATING MATERIAL
MASSE DE REVÊTEMENT AQUEUSE

(43) Veröffentlichungstag der Anmeldung: 30.10.2019
(73) Patentinhaber: DAW SE, 64372 Ober-Ramstadt (DE)
(72) Erfinder: KAMMERER, Christian, 4320 Perg (AT); WASSERFALL-KNÖGLER, Eva-Maria, 4352 Klam (AT); LASSACHER, Paul, 4020 Linz (AT); OTTENS, Stephan, 64372 Ober-Ramstadt (DE)
(74) Vertreter: Metten, Karl-Heinz

(56) Entgegenhaltungen:
- WO-A1-2011/063124
- WO-A1-2011/113692
- DE-A1- 3 432 482
- DE-A1- 10 116 604
- DE-A1- 10 305 749
- DE-A1- 19 936 464

## Beschreibung

Die vorliegende Erfindung betrifft eine wässrige Beschichtungsmasse, insbesondere wässrige Lasur-Beschichtungsmasse, die im Wesentlichen frei von organischen Topfkonservierungsmitteln ist. Ferner betrifft die Erfindung ein Beschichtungssystem, insbesondere Lasurbeschichtungssystem, enthaltend oder gebildet aus mindestens einer erfindungsgemäßen Beschichtungsmasse und mindestens einer wässrigen Farbtonpaste. Außerdem betrifft die Erfindung eine Beschichtung, insbesondere Lasur-Beschichtung, erhalten oder erhältlich aus einer erfindungsgemäßen Beschichtungsmasse oder aus einem erfindungsgemäßen Beschichtungssystem. Auch betrifft die Erfindung ein Substrat enthaltend eine beschichtbare Oberfläche und auf dieser beschichtbaren Oberfläche eine erfindungsgemäße Beschichtung. Darüber hinaus betrifft die Erfindung einen Kit-of-Parts für ein erfindungsgemäßes Beschichtungssystem. Schließlich betrifft die Erfindung die Verwendung der erfindungsgemäßen Beschichtungsmasse oder des erfindungsgemäßen Beschichtungssystems oder des erfindungsgemäßen Kit-of-Parts für die, insbesondere lasierende, Beschichtung von Substratoberflächen.

Lasierende Beschichtungen im Innenbereich erfreuen sich wachsender Beliebtheit. Dies betrifft nicht nur Beschichtungen für den Innenbereich, beispielsweise den Küchen- und Wohnbereich, sondern ebenfalls Außenanwendungen. Beispielsweise haben Beschichtungen für den Innenbereich regelmäßig raumlufthygienisch unbedenklich zu sein. Darüber hinaus wird einerseits Schimmelresistenz gefordert, andererseits sollen moderne Innenraumbeschichtungen ohne Konservierungsmittel auskommen. Um den Bedürfnissen eines breiten Kundenkreises gerecht zu werden, haben Lasur-Beschichtungen nicht nur lagerstabil, sondern überdies im Allgemeinen gut abtönbar, wasserabweisend und wetterstabil zu sein.

Die DE 103 05 749 A1 betrifft silikatgebundene Materialien wie Beschichtungs-, Form-, Klebe- und Spachtelmaterialien unter Verwendung eines silikatischen Bindemittels, wobei das Silikatbindemittel wasserlösliches Silikat, Kieselsäure und eine oder mehrere wasserlösliche organische Stickstoffverbindungen als Stabilisator enthält. Auf diese Weise sollen Anstrichmittel mit unterschiedlichen Eigenschaften für den Einsatz im Innenbereich bereitgestellt werden können, die einen größtmöglichen Schutz für Mensch und Umwelt bieten, für Allergiker geeignet sind, und gleichzeitig eine hohe Lagerstabilität ohne Eigenschaftsveränderungen aufweisen. Außerdem soll sich das Anstrichmittel gemäß DE 103 05 749 A1 auf Wasserbasis mit einem hautfreundlichen pH-Wert formulieren lassen, und zwar ohne dass zusätzliche Sicherungs- bzw. Schutzmaßnahmen erforderlich sind.

Es wäre nun wünschenswert, solche Beschichtungen verwenden zu können, die nicht mit den Nachteilen des Stands der Technik behaftet sind. Daher lag der vorliegenden Erfindung die Aufgabe zu Grunde, lagerstabile Lasur-Beschichtungen verfügbar zu machen, die gleichwohl ohne biozid wirkende Konservierungsmittel auskommen und über eine hinreichende Wetterstabilität verfügen.

Demgemäß wurde eine wässrige, im Wesentlichen organische Topfkonservierungsmittel-freie Beschichtungsmasse, insbesondere wässrige Lasur-Beschichtungsmasse, gefunden mit einem pH-Wert im Bereich von 10,0 bis 12,0, insbesondere im Bereich von 10,5 bis 11,5 oder bis 11,4, oder eingestellt auf einen pH-Wert im Bereich von 10,0 bis 12,0, insbesondere im Bereich von 10,5 bis 11,5 oder bis 11,4, enthaltend oder bestehend aus
a) mindestens einem polymeren organischen Acrylat-basierten Bindemittel auf Dispersionsbasis,
b) mindestens einer Base,
c) mindestens einem Rheologiemodifizierungsmittel, insbesondere Verdicker,
d) mindestens einem die Lagerfähigkeit der wässrigen Beschichtungsmasse steigernden Stabilisator, umfassend oder bestehend aus mindestens einer wasserlöslichen organischen Stickstoffverbindung, und
e) mindestens einem Additiv.

Die erfindungsgemäßen wässrigen Beschichtungsmassen können auch als Wasserenthaltende Beschichtungsmassen oder als Beschichtungsmassen auf Wasserbasis bezeichnet werden. Die erfindungsgemäße wässrige Beschichtungsmasse liegt dabei regelmäßig in Form einer wässrigen Dispersion vor.

Die vorangehend genannten erfindungsgemäßen Beschichtungsmassen sind im Wesentlichen frei von organischen Topfkonservierungsmitteln. Insbesondere sind organische Topfkonservierungsmittel die in der Artikel 95 Liste (Stand 20. März 2018) der ECHA (European Chemicals Agency) unter der Kategorie 6 aufgeführten Verbindungen. Die erfindungsgemäßen Beschichtungsmassen sind demgemäß besonders bevorzugt im Wesentlichen frei von Topfkonservierungsmitteln ausgewählt aus der Gruppe bestehend aus Hexa-2,4-diensäure (Sorbinsäure), N-(Trichloromethylthio)phthalimid (Folpet), Tetrahydro-3,5-dimethyl-1,3,5-thiadiazin-2-thion (Dazomet), N-(3-Aminopropyl)-N-docecylpropan-1,3-diamin, 2,2'-Dithiobis-[N-methylbenzamid] (DTBMA), Biphenyl-2-ol, Natrium-2-biphenylat, Methenamin-3-chloroallylochloride (CTAC), 2,2',2"-(Hexahydro-1,3,5-triazin-1,3,5-triyl)-triethanol (HHT), N,N'-methylenebismorpholin (MBM), 1,3-Bis(hydroxymethyl)-5,5-dimethyl-imidazolidin-2,4-dion (DMDMH), 7a-Ethyldihydro-1H,3H,5H-oxazolo[3,4-c]oxazol (EDHO), Dodecylguanidin monohydrochlorid, Kalium-2-biphenylat, (Benzyloxy)methanol, p-[(Diiodomethyl)-sulphonyl]toluol, Kalium-(E,E)-hexa-2,4-dienoat (Kaliumsorbat), 2-Octyl-2H-isothiazol-3-on (OIT), 2-Brom-2-(brommethyl)pentanedinitril (DBDCB), 3-Iodo-2-propynylbutylcarbamat (IPBC), Natrium-N-(hydroxymethyl)glycinat, 2-Butyl-benzo[d]-isothiazol-3-on (BBIT), cis-1-(3-Chloroallyl)-3,5,7-triaza-1-azonia-adamantanchlorid (cis CTAC), 2-Methyl-1,2-benzothiazol-3(2H)-on (MBIT), 1,2-Benzisothiazol-3(2H)-on (BIT), Tetrahydro-1,3,4,6-tetrakis-(hydroxymethyl)-imidazol(4,5-d)imidazol-2,5(1H,3H)-dion (TMAD), Didecyldimethylammoniumchlorid (DDAC), Trimethyl-1,3,5-Triazin-1,3,5(2H,4H,6H)-triethanol (HPT), Tetrakis(hydroxymethyl)-phosphoniumsulfat (THPS), 3,3-Methylenbis(5-methyl-oxazolindin) (MBO), Didecyldimethylammoniumchlorid (DDAC), 2-Methyl-2H-isothiazol-3-one (MIT), 5-Chloro-2-methyl-2H-isothiazol-3-on (CIT), (Ethylendioxy)-dimethanol, 2,2-Dibrom-2-cyanoacetamid (DBNPA), Natriumpyrithion, Zinkpyrithion, (Benzoyloxy)methanol oder Natrium-p-chloro-m-cresolat sowie deren beliebige Mischungen.

Im Sinne der Erfindung ist eine erfindungsgemäße Beschichtungsmasse dann im Wesentlichen frei von organischen Topfkonservierungsmitten, wenn in den Beschichtungsmassen keine organischen Topfkonservierungsmittel vorliegen oder wenn darin organische Topfkonservierungsmittel, jeweils bezogen auf das individuelle Topfkonservierungsmittel, bevorzugt bezogen auf die Gesamtmenge an organischen Topfkonsemerungsmitteln, in Mengen von nicht mehr als 100 ppm, bevorzugt von nicht mehr als 50 ppm und besonders bevorzugt von nicht mehr als 2 ppm (einschließlich Formaldehyd) und in Bezug auf 5-Chloro-2-methyl-4-isothiazolin (CIT) in Mengen von weniger als 0,5 ppm nach Maßgabe der "Vergabegrundlage für Umweltzeichen" der RAL gGmbH für "Emissionsarme Innenwandfarben RAL-UZ 102" (Ausgabe Januar 2015) enthalten sind.

Zwar ist es grundsätzlich möglich, den erfindungsgemäßen Beschichtungsmassen auch Konservierungsmittel, jedoch keine Topfkonservierungsmittel, z.B. Filmkonservierungsmittel zuzusetzen. Allerdings hat sich als ein besonderer Vorteil der erfindungsgemäßen Beschichtungsmassen erwiesen, dass diese über einen hinreichend langen Zeitraum auch ohne Zusätze an organischen Bioziden wie organischen Konservierungsmitteln stabil sind. Erfindungsgemäße Beschichtungsmassen zeichnen sich daher in einer besonders zweckmäßigen Ausführungsform auch dadurch aus, dass in diesen keine Topfkonservierungsmittel und keine Filmkonservierungsmittel, insbesondere keine organischen Biozide, vorliegen oder dass in diesen Beschichtungsmassen Topfkonservierungsmittel und Filmkonservierungsmittel, insbesondere organische Biozide, in Mengen von nicht mehr als 100 ppm, vorzugsweise von nicht mehr als 50 ppm und besonders bevorzugt von nicht mehr als 2 ppm (einschließlich Formaldehyd) und in Bezug auf 5-Chloro-2-methyl-4-isothiazolin (CIT) in Mengen von weniger als 0,5 ppm enthalten sind. D.h. im Sinne der Erfindung ist eine erfindungsgemäße Beschichtungsmasse insbesondere auch dann im Wesentlichen frei von organischen Bioziden wie organischen Konservierungsmitten, wenn nach Maßgabe der "Vergabegrundlage für Umweltzeichen" der RAL gGmbH für "Emissionsarme Innenwandfarben RAL-UZ 102" (Ausg. Januar 2015) keine organischen Biozide bzw. organischen Konservierungsmittel darin enthalten sind oder, jeweils bezogen auf das individuelle Biozid bzw. Konservierungsmittel, nicht mehr als 2 ppm (einschließlich Formaldehyd) und in Bezug auf 5-Chloro-2-methyl-4-isothiazolin (CIT) weniger als 0,5 ppm.

Darüber hinaus sind auch solche erfindungsgemäßen wässrigen Beschichtungsmasse bevorzugt, die, alternativ und insbesondere zusätzlich, weniger als 1 g/l, bevorzugt weniger als 500 mg/l und besonders bevorzugt weniger als 300 mg/l an organischen Lösungsmitteln enthalten und die insbesondere frei von organischen Lösungsmitteln sind.

Mit den erfindungsgemäßen Beschichtungsmassen lassen sich in einigen Ausgestaltungen auch Beschichtungen mit ausgeprägter Blockfestigkeit erhalten. Zur Prüfung der Blockfestigkeit von Filmen aus den erfindungsgemäßen Beschichtungsmassen können zum Beispiel PVC-Folien mit einer Nassschichtdicke von etwa 250 µm beschichtet werden. Nach dem Trocknen der Beschichtungen legt man zwei solcher Folienstücke mit ihrer beschichteten Seite aufeinander und belastet diese für und 24 Stunden bei 600C mit 1,5 kp/cm². Lassen sich die Folienstücke danach ohne merklichen Kraftaufwand und ohne jede Oberflächenbeschädigung voneinander trennen, kann die höchste Bewertungsstufe vergeben werden. Diese höchste Bewertungsstufe ist mit Beschichtungen aus den erfindungsgemäßen Beschichtungsmassen zugänglich.

Für das polymere organische Bindemittel a) kommen in den erfindungsgemäßen Beschichtungsmassen Acrylat-basierte Systeme zum Einsatz Demgemäß hat mindestens ein Monomere bzw. Comonoer bevorzugt ein Acrylsäureester, Methacrylsäurester, Acrylsäure und/oder Methacrylsäure zu sein, In einer zweckmäßigen Ausgestaltung basiert das in Wasser dispergierte oder dispergierbare polymere Bindemittel dabei auf i) Acrylsäureestern und Vinylaromaten oder auf ii) Acrylsäureestern und Vinylestern mindestens einer Koch-Säure, insbesondere der Versatinsäure, und gegebenenfalls Vinylaromaten, insbesondere Styrol. Geeignete Acrylat-basierte Bindemittel umfassen z.B. Copolymere auf Basis von Vinylaromaten, insbesondere Styrol, und Acrylaten. Bevorzugt wird auf Reinacrylate zurückgegriffen. Reinacrylate umfassen regelmäßig Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein. Geeignete Reinacrylate können demgemäß ausgewählt sein aus der Gruppe bestehend aus Homopolymeren gebildet aus Meth)acrylaten, Copolymeren gebildet aus (Meth)acrylaten, Copolymeren gebildet aus (Meth)acrylaten und (Meth)acrylsäure und deren Mischungen.

Das organische Bindemittel a) wird in einer besonders zweckmäßigen Ausgestaltung in Form einer wässrigen Bindemitteldispersion eingesetzt.

Der Gewichtsanteil der polymeren organischen Bindemittel kann grundsätzlich in weiten Bereichen variieren. Solche erfindungsgemäßen Beschichtungszusammensetzungen sind bevorzugt, bei denen der Gewichtsanteil an organischem Acrylat-basiertem Bindemittel, bezogen auf das Gesamtgewicht, im Bereich von 5 bis 35 Gew.%, vorzugsweise 10 bis 30 Gew.% und besonders bevorzugt 12 bis 25 Gew. % liegt.

Geeignete Basen b) können geeigneter Weise ausgewählt werden aus der Gruppe bestehend aus Wasserglas, insbesondere Kaliumwasserglas, Kieselsol, Alkalihydroxiden und beliebigen Mischungen hiervon. Unter den Alkalihydroxiden wird bevorzugt zurückgegriffen auf Natriumhydroxid, z.B. in Form von Natronlauge, und/oder Kaliumhydroxid, z.B. in Form von Natronlauge. Alternativ oder zusätzlich können auch flüchtige Neutralisationsmittel wie Ammoniaklösung und/oder Amine wie 2-Amino-2-methyl-1-propanol und/oder 2-Amino-2-ethyl-1,3-propandiol eingesetzt werden.

Grundsätzlich kommen als Wassergläser Natrium-, Kalium- und Lithiumwasserglas sowie deren Mischungen in Betracht. Bevorzugt wird für die erfindungsgemäßen Beschichtungszusammensetzungen auf Kaliumwasserglas zurückgegriffen. Bei Wasserglas handelt es sich z.B. um Reaktionsprodukte aus Alkalikarbonaten bzw. -hydroxiden mit Quarzsand. Diese werden kommerziell häufig in Form wässriger Lösungen angeboten. In diesen kommerziell erhältlichen wässrigen Lösungen liegt das Wasserglas im Allgemeinen mit einem 22 Gew.-%-igen Feststoffanteil vor. Wasserglas kann alternativ grundsätzlich auch in Pulverform eingesetzt werden. Ferner sind unter den erfindungsgemäßen Beschichtungszusammensetzungen auch diejenigen besonders geeignet, bei denen der Gewichtsanteil an Wasserglas, bezogen auf das Gesamtgewicht der Beschichtungszusammensetzung, im Bereich von 0,1 bis 3,5 Gewichtsprozent, vorzugsweise im Bereich von 0,3 bis 2,4 Gewichtsprozent und besonders bevorzugt im Bereich von 0,6 bis 1,8 Gewichtsprozent liegt.

Geeignete Kieselsole sind dem Fachmann bekannt. Kieselsole sind im Handel in Form wässriger kolloidaler Suspensionen von Polykieselsäuremolekülen erhältlich. Das in wässrigen Systemen vorliegende Kieselsol ist vorzugsweise alkalisch und hat besonders bevorzugt einen pH-Wert größer 9. Die mittlere Partikelgröße des besonders geeigneten Kieselsols liegt üblicherweise bei 80 nm oder darunter und ist bevorzugt kleiner oder gleich 40 nm und insbesondere bevorzugt kleiner oder gleich 20 nm. Ganz besonders bevorzugt ist die mittlere Partikelgröße des Kieselsols kleiner oder gleich 10 nm.

Des Weiteren verfügen die erfindungsgemäßen Beschichtungsmasse über mindestens ein Rheologiemodifizierungsmittel c), insbesondere Verdicker. Geeignete Verdicker können z.B. ausgewählt sein aus der Gruppe bestehend aus Polyacrylat-Verdickern, Polyurethan-Verdickern, Polyharnstoff-Verdickern, Polysaccharid-Verdickern, insbesondere Xanthan-Gum, Cellulose-Verdickern, insbesondere Hydroxyethylcellulose und/oder Methylcellulose, Verdickern auf Polysaccharidbasis, Verdickern auf Polyether-Polyolbasis, Polyvinylalkohol-Verdickern, Polyetherpolyol-Verdickern, und beliebigen Mischungen hiervon.

Besonders geeignete erfindungsgemäße Beschichtungsmassen verfügen ferner über mindestens einen die Lagerfähigkeit der wässrigen Beschichtungsmasse steigernden Stabilisator d), umfassend oder bestehend aus mindestens einer wasserlöslichen organischen Stickstoffverbindung. In einer besonders zweckmäßigen Ausführungsform verfügen die erfindungsgemäßen Beschichtungsmassen über solche wasserlöslichen organischen Stickstoffverbindungen, die ausgewählt sind aus der Gruppe bestehend aus Verbindungen mit einer, zwei oder mehr Ammoniumgruppen, insbesondere quartären Ammoniumgruppen, Alkylendiamintetracarboxylsäure, insbesondere Ethylendiamintetraessigsäure, Salzen der Alkylendiamintetracarboxylsäure, insbesondere Salzen der Ethylendiamintetraessigsäure, Alkylendiamintetracarboxlat, insbesondere Ethylendiamintetraacetat, alkoxyliertes, insbesondere propoxyliertes, Tetraalkylalkylendiamin, insbesondere Tetraalkylethylendiamin, Tetrahydroxyalkylalkylendiamin, insbesondere N,N,N',N'-Tetrakis-(2-hydroxypropyl)-ethylendiamin, alkoxyliertem, insbesondere ethoxyliertem oder propoxyliertem, (N,N')-Tetraalkylalkylendiamin, insbesondere (N,N')-Tetraalkylethylendiamin, und beliebigen Mischungen hiervon. Bei den Ammoniumgruppen kann es sich z.B. um protonierte Amine, beispielsweise um protonierte Mono-, Di- oder Trialkylamine handeln. Bevorzugt wird auf quartäre Ammoniumgruppen zurückgegriffen. Bei quartären Ammoniumgruppen sind alle vier Valenzen des Stickstoffatoms organisch gebunden. Unter den wasserlöslichen organischen Stickstoffverbindungen enthaltend quartäre Ammoniumgruppen sind wiederum solche bevorzugt, die über zwei quartäre Ammoniumgruppen verfügen, bevorzugt über eine Alkyleneinheit, beispielsweise eine Ethyleneinheit, miteinander verbunden. Bei den organischen Resten der quartäre Ammoniumverbindungen kann in einer Ausführungsform auf aliphatische Kohlenwasserstoffeinheiten mit 1 bis 20, vorzugsweise 2 bis 10 Kohlenstoffatomen oder auf aromatische Einheiten, beispielsweise Phenyl, zurückgegriffen werden.

Des Weiteren verfügen die erfindungsgemäßen Beschichtungsmasse über mindestens ein Additiv (e). Geeignete Additive sind dabei vorzugsweise ausgewählt aus der Gruppe bestehend aus Entschäumern, insbesondere Polyethersiloxan-basierten, vorzugsweise kieselsäurehaltigen, Entschäumern, Flammschutzmitteln, Filmkonservierungsmitteln, Filmbildehilfsmitteln und beliebigen Mischungen hiervon.

Grundsätzlich kann für Filmkonservierungsmittel auf die in der Kategorie 7 der Artikel 95 Liste (Stand 20. März 2018) der ECHA (European Chemicals Agency) aufgeführten Verbindungen zurückgegriffen werden. Als besonders geeignete Filmkonservierungsmittel, welche regelmäßig den Befall von Anstrichen mit Pilzen und Algen verhindern sollen, eignen sich dabei vor allem Biphenyl-2-ol, Natrium-2-biphenylat, 2-Thiazol-4-yl-1H-benzoimidazol (Thiabendazole), Diuron, Dichloro-N-[(dimethylamino)sulphony]fluoro-N-(ptolyl)-methansulphen-amid (Tolylfluanid), Terbutryn, N-(Dichlorofluoromethylthio)-N',N'-dimethyl-N-phenylsulfamid (Dichlofluanid), Silbernitrat, Carbendazim, p-[(Diiodomethyl)sulphonyl]-toluol, Dimethyloctadecyl-[3-(trimethoxysilyl)propyl]ammoniumchlorid, 3-(4-isopropyl-phenyl)-1,1-dimethylurea (Isoproturon), 1-[[2-(2,4-Oichlorophenyl) -4-propyl-1,3-dioxolan-2-yl]methyl]-1H-1,2,4-triazol (Propiconazole), 4,5-Dichloro-2-octylisothiazol-3(2H)-on (DCOIT), 1-(4-Chlorophenyl)-4,4-dimethyl-3-(1,2,4-triazol-1-ylmethyl)pentan-3-ol (Tebuconazole), Silber/Natriumhydrogenzirkoniumphosphat, Silber/Zinkzeolite, Silberzeolite, Fludioxonil, Methyl-(E)-2-{2[6-(2-cyanophenoxy)pyrimidin-4-yloxyl]phenyl}-3-methoxyacrylat (Azoxystrobin) und deren beliebige Mischungen.

In zweckmäßigen Ausgestaltungen können die erfindungsgemäßen Beschichtungsmassen ferner eine oder mehrere der folgenden Komponenten enthalten:
f) mindestens einem Füllstoff und/oder mindestens einem Pigment,
g) mindestens einem organischen und/oder anorganischen Lichtschutzmittel, insbesondere UV-Lichtschutzmittel,
h) mindestens einem polymeren organischen Polyurethan-basierten Bindemittel auf Dispersionsbasis,
i) mindestens einem Hydrophobierungsmittel,
j) mindestens einem Dispergiermittel und/oder mindestens einem Netzmittel, insbesondere mindestens einem Dispergiermittel,
k) mindestens ein Mattierungsmittel und/oder
1) mindestens einen Wachs, insbesondere zugegeben in Form einer wässrigen Wachsemulsion.

Ferner sind die erfindungsgemäßen Beschichtungsmassen mit mindestens einem Füllstoff und/oder mindestens einem Pigment (Komponente f)) ausgestattet.

Geeignete Füllstoffe umfassen dabei zum Beispiel Tonminerale; Talk; Glimmer; calcitische Füllstoffe, insbesondere Carbonate wie Calciumcarbonate, Dolomite, Calcite und/oder Aragonite; silikatische Füllstoffe, insbesondere Quarzite, Schichtsilikate, Feldspate und/oder Vulkanite; Bariumsulfat; Aluminiumhydroxid; Kalk oder beliebige Gemische hiervon.

Als geeignete Pigmente seien exemplarisch anorganische Pigmente wie Bunt-, Schwarz- und Weißpigmente (Farbpigmente) sowie Glanzpigmente und organische Pigmente wie Bunt- und Schwarzpigmente genannt. Als geeignete anorganische Weißpigmente kommen zum Beispiel Titandioxid, Zinkweiß, Farbenzinkoxid; Zinksulfid und/oder Lithopone in Betracht. Unter den anorganischen Schwarzpigmenten kann zum Beispiel ausgewählt werden unter Eisenoxidschwarz, Eisen-Mangan-Schwarz, Spinellschwarz und/oder Ruß. Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cadmiumsulfoselenid, Cersulfid, Molybdatrot, Ultramarinrot, Eisenoxidbraun, Mischbraun, Spinell- und Korundphasen, Chromtitangelb, Chromorange, Cersulfid, Eisenoxidgelb, Nickeltitangelb, Chromtitangelb, Spinellphasen, Cadmiumsulfid, Cadmiumzinksulfid, Chromgelb und/oder Bismutvanadat.

Das mindestens eine organische und/oder anorganische Lichtschutzmittel, insbesondere UV-Lichtschutzmittel, kommt insbesondere bei solchen erfindungsgemäßen Beschichtungsmassen zum Einsatz, die für Außenanwendungen vorgesehen sind. Geeignete Das anorganische UV-Lichtschutzmittel umfassen z.B. Titandioxid, vorzugsweise mit einer mittleren, insbesondere absoluten, Partikelgröße kleiner oder gleich 5 µm. Geeignete organische UV-Lichtschutzmittel stellen u.a. die sogenannten HALS-(Hindered amine light stabilizers)-Lichtschutzmittel dar.

Unter den polymeren organischen Polyurethan-basierten Bindemitteln h) sind sogenannten 2K-Polyurethan-basierte Bindemittel bevorzugt. Durch Mitverwendung der polymeren organischen Polyurethan-basierten Bindemittel erhält man regelmäßig erfindungsgemäße Beschichtungsmassen, die Beschichtungen mit ausgeprägter, insbesondere verbesserter, Wetterbestänigkeit, und/oder ausgeprägter, inbesondere verbesserter, mechanischer Beständigkeit liefern.

Die erfindungsgemäßen Beschichtungsmassen verfügen ferner über mindestens ein Hydrophobierungsmittel (Komponente i)). Bevorzugte Hydrophobierungsmittel können dabei ausgewählt werden aus der Gruppe bestehend aus Alkylakoxysilanen, Alkylalkoxysiloxanen, wasserlöslichen Alkysilikonaten, Monoalkylsilantriol, Dialkylsilandiol, Trialkylsilanol, den Alkalisalzen von Monoalkylsilantriol, Dialkylsilandiol undTrialkylsilanol, und beliebigen Mischungen hiervon. Unter den Hydrophobierungsmitteln sind Kaliummethylsilikonat, Kaliummethylsilantriolat und Kaliumethylsilantriolat sowie deren Mischungen besonders bevorzugt. Insbesondere liegen in den erfindungsgemäßen Beschichtungsmassen wasserlösliche Alkysilikonate, insbesondere Kaliummethylsilikonat, und mindestens ein Alkalisalz von Monoalkylsilantriol, wie Methylsilantriol, Dialkylsilandiol, wie Dimethylsilandiol, und/oder Trialkylsilanol, wie Trimethylsilanol, insbesondere das Kaliumssalz von Methylsilantriol, nebeneinander vor. Unter den Monoalkylsilantriolen, Dialkylsilandiolen und Trialkylsilanolen sowie den Alkalisalzen dieser Silanole sind die C₁-C₅-Alkylsilantriole besonders geeignet. Besonders bevorzugt sind die Kaliumsalze von Methylsilantriol und Ethylsilantriol. Es hat sich gezeigt, dass die Alkalisalze der Silanole, insbesondere die Kaliumsalze, stabiler sind als die reinen Silanole. Vorzugsweise werden die Alkylsilanole und/oder deren Alkalisalze in die erfindungsgemäße Beschichtungsmasse in Form wässriger Lösungen eingebracht. Diese wässrigen Lösungen können dabei zum Beispiel in Konzentrationen von 0,5 bis 90% eingesetzt werden, wobei Konzentration im Bereich von 1 bis 5 Gewichtsprozent häufig praktikabel sind. Exemplarisch seien als geeignete Vertreter der Alkylalkoxysilane Verbindung der nachfolgenden Formel (I) genannt: (R¹-O)ₓ(H)_{y}M(R²)_{z} mit M = Si, Ge, Ti, Zr oder Hf, R1 = Methyl, Ethyl, i-Propyl, n-Propyl, i-Butyl, n-Butyl oder t-Butyl, R2 = geradkettig oder verzweigtes C3- bis C32-Alkyl, Cycloalkyl, Aryl, Alkylaryl, x = 1,2 oder 3, y = 0, 1 oder 2, z = 1, 2 oder 3, wobei x + y = 1, 2 oder 3 und x + y + z = 4 ist. Bevorzugt wird zurückgegriffen auf Verbindung gemäß Formel (I), für die gilt: M = Si, R1 = Ethyl oder i-Propyl oder n-Propyl, insbesondere Ethyl, R2 = geradkettig oder verzweigtes C5- bis C12-Alkyl, insbesondere n-Octyl oder iso-Octyl, und x = 2 oder 3, insbesondere 3, y = 0 und z = 1 oder 2, insbesondere 1. Besonders geeignete Alkylalkoxysilane sind Mono-, Di- oder Triethoxy-(C6-bis C12-Alkyl)-silan, wobei Triethoxy-iso-octylsilan und Triethoxyn-octylsilan besonders bevorzugt sind. Geeignete Alkylalkoxysiloxane stellen Dimere und Oligomere der vorangehend genannten Alkylalkoxysilane dar. Besonders bevorzugt wird auch auf wasserlösliche Hydrophobierungsmittel in Form von Alkylsilikonaten zurückgegriffen. Geeignete Alkylsilikonate umfassen Verbindungen der Formel (II) HO-[Si(R³)(OX)-O-]ₙH, worin der Rest R³ eine Alkylgruppe mit 1 bis 8 C-Atomen, X ein Kation und n eine Zahl im Bereich von 1 bis 6 bedeutet. Vorzugsweise liegt das Molgewicht dieser Alkylsilikonate im Bereich von 100 bis 500. In einer besonders geeigneten Ausgestaltung ist R3 eine Methyl-, Ethyl-, i-Propyl- oder n-Propylgruppe, vorzugsweise eine Methylgruppe. Als Kationen sind insbesondere die Alkalimetalle, insbesondere Kalium, geeignet. Beispielhaft seien als bevorzugte Alkylsilikonate Kaliummethylsilikonat und Natriumpropylsilikonat genannt. Als besonders vorteilhaft hat sich hier Kaliummethylsilikonat erwiesen. Der Trockenanteil an Hydrophobierungsmittel, insbesondere an Alkylsilikonaten wie Kaliummethylsilikonaten, in den erfindungsgemäßen Beschichtungszusammensetzung liegt regelmäßig im Bereich vom 0,001 bis 9,0 Gew.%, bevorzugt 0,01 bis 6,0 Gew.-% und besonders bevorzugt 0,1 bis 4 Gew.%, bezogen auf das Gesamtgewicht der Beschichtungsmasse. Erfindungsgemäße Beschichtungsmassen enthaltend Hydrophobierungsmittel (Komponente i)) eignen sich insbesondere auch für Anwendungen im Außenbereich.

Geeignete Dispergiermittel j) umfassen zum Beispiel polyanionische Dispergiermittel. Diese können zweckmäßigerweise ausgewählt sein aus der Gruppe bestehend aus Polycarboxylaten, insbesondere Salze von Polyacrylsäuren, Polyphosphaten, insbesondere lineare Polyphosphate und/oder zyklische Metaphosphate, und beliebigen Mischungen hiervon. Bevorzugt wird auf die Salze von Polyacrylsäuren zurückgegriffen. Als Dispergiermittel werden regelmäßig solche Substanzen bezeichnet, die die festen partikulären Bestandteile, insbesondere Pigmente, in einer noch nicht ausgehärteten Beschichtungszusammensetzung in der Schwebe halten und eine Agglomeration dieser Teilchen, auch als Flokkulation bekannt, verhindern bzw. zurückdrängen. In Abgrenzung von Netzmitteln, bei denen es sich regelmäßig um niedrigmolekulare, amphiphile Substanzen handelt, umfassen Dispergiermittel im Allgemeinen gegen Flokkulation stabilisierende oligomere und polymere Verbindungen. Geeignete Netzmittel können demgemäß niedrigmolekulare, d.h. nicht-oligomere und nicht polymere Tenside umfassen, beispielsweise ethoxylierte Fettalkohole, Fettalkoholsulfate oder Alkylphosphonate. Als besonders geeignete Netzmittel für die erfindungsgemäßen Beschichtungsmassen haben sich Polysiloxane erwiesen. Bevorzugt enthalten die erfindungsgemäßen Beschichtungsmassen das mindestens eine Dispergiermittel. Durch den Einsatz von Dispergiermitteln gelingt häufig eine bessere Untergrundbenetzung, womit letztendlich verbesserte Haftungseigenschaften einhergehen. Besonders geeignete sind diese erfindungsgemäßen Beschichtungsmassen im Wesentlichen frei von Netzmitteln.

Unter den polymeren organischen Polyurethan-basierten Bindemitteln sind die sogenannten 2K-Polyurethan-basierten Bindemittel bevorzugt.

Besonders geeignete erfindungsgemäße Beschichtungsmasse können ferner über k) mindestens ein Mattierungsmittel verfügen. Zufriedenstellende Resultate erhält man dabei insbesondere mit solchen Mattierungsmitteln, die ausgewählt sind aus der Gruppe bestehend aus Kieselsäure, insbesondere Fällungskieselsäure, Aluminiumnatriumsalzen, Diatomene, Kaolin und beliebigen Mischungen hiervon. Die der Erfindung zugrunde liegende Aufgabe wird aber besonders gut bei Einsatz von amorpher Fällungskieselsäure gelöst.

In den erfindungsgemäßen Beschichtungsmassen liegen Mattierungsmittel und/oder Pigmente, bevorzugt Mattierungsmittel und Pigmente, in einer vorteilhaften Ausgestaltung in einer Gesamtmenge nicht oberhalb von 6 Gew.%, vorzugsweise nicht oberhalb von 4 Gew.% und besonders bevorzugt nicht oberhalb von 2 Gew.%, bezogen auf das Gesamtgewicht der Beschichtungsmasse, vor. Alternativ und insbesondere zusätzlich liegen in den erfindungsgemäßen Beschichtungsmassen Füllstoffe in einer Menge im Bereich von o bis 14 Gew.%, vorzugsweise im Bereich von o bis 11 Gew.% und besonders bevorzugt im Bereich von 0,5 bis 8 Gew.%, bezogen auf das Gesamtgewicht der Beschichtungsmasse, vor.

Geeignete erfindungsgemäße Beschichtungsmassen können ferner über 1) mindestens einen Wachs, insbesondere zugegeben in Form einer wässrigen Wachsemulsion, verfügen. Unter geeignete Wachse im Sinne der vorliegenden Erfindung sollen solche natürlichen, halbsynthetischen und synthetischen organischen Verbindungen verstanden werden, die bei 20°C noch knetbar sind und die oberhalb von 40°C ohne Zersetzung zu schmelzen beginnen, d.h. in einen niedrigviskosen, schmelzflüssigen Zustand übergehen. Geeignete Wachse umfassen z.B. synthetische Wachse wie Bienenwachs, Carnaubawachs und/oder Paraffinwachse, und synthetische Wachse wie Polyalkylenwachse, insbesondere Polyethylen- und Polypropylenwachse, Polyamidewachse, und/oder oxidierte Polyalkylenwachse, oder deren Mischungen. Als geeignete Wachse seien ausdrücklich auch genannt sogenannte Esterwachse, das heißt Ester aus langkettigen, linearen Carbonsäuren und ein- oder mehrwertigen Alkoholen, Montanwachse, mikrokristalline Wachse, Wachsalkohole, Candelillawachs, Ozokerit-Wachs und beliebigen Mischungen hiervon. Vorzugsweise beträgt die Menge des Wachses (Feststoffanteil) 0,01 bis 3,0 Gew.%, bezogen auf das Gesamtgewicht der Beschichtungsmasse, bevorzugt 0,03 bis 2,0 Gew.%, besonders bevorzugt 0,1 bis 1,5 Gew.% und insbesondere 0,3 bis 1,0 Gew.-%.

Vor allem solche erfindungsgemäßen Beschichtungsmassen lassen sich besonders anwendungsfreundlich applizieren, die über eine bei 23°C ermittelte Fließkurve gebildet aus den auf der Abszisse aufgetragenen Schergeschwindigkeiten γ̇ und den auf der Ordinate aufgetragenen korrespondierenden Schubspannungswerten τ verfügen, die bei einer Schergeschwindigkeit γ̇ von 400 s⁻¹ einen Schubspannungswert τ im Bereich von 0,05 bis 0,3 Pa·s und vorzugsweise im Bereich von 0,1 bis 0,2 Pa·s besitzt und/oder die bei einer Schergeschwindigkeit γ̇ von 1200 s⁻¹ einen Schubspannungswert τ im Bereich von 0,01 bis 0,15 und vorzugsweise im Bereich von 0,05 bis 0,10 Pa·s besitzt.

Die Fließkurven lassen sich z.B. mit dem Rotationsrheometer HAAKE RheoStress 1 der Firma Thermo Scientific unter Verwendung der Sofware HAAKE RheoWin 4.30.0030 bestimmen. Um vergleichbare Ergebnisse zu erhalten, sollten die Messungen bei konstanter Temperatur, beispielsweise bei 23,00 °C ± 0,20 °C vorgenommen werden. Im Allgemeinen reicht es aus, eine Rotationsrampe von o bis 1.500 s⁻¹ im Zeitraum von 180 s zu fahren. Der zeitliche Verlauf der Messungen lässt sich untergliedern in drei Segmente, wobei im ersten Segment die Messprobe über eine Dauer von 180 s temperiert wird, anschließend über einen Zeitraum von 180 s ein Schergefälle von o bis 1500 1/s (Segment 2) und sodann über einen Zeitraum von 180 s ein Schergefälle von 1500 bis o 1/s (Segment 3) gefahren wird. Die Werte für die Schubspannung werden aus dem Segment 3 für die Schergeschwindigkeiten 400 1/s und 1200 1/s bestimmt. Für die Temperierung kann das Gerät Haake Thermostat V verwendet werden. In Form und Material bzw. die Messgeometrie der Messapparatur bzw. des Rotors basieren zweckmäßigerweise auf der Spezifikation Z20 DIN. Für die Prüfbedingungen können die Standardeinstellungen gemäß dem Messsystem Z20 DIN verwandt werden. Ein geeignetes Spaltmaß beträgt 4,200 mm, ein geeignetes Mess- bzw. Probenvolumen 8,2 ml. Zur Minimierung von Messfehlern sind nur Messpunkte bei Schergeschwindigkeiten größer 10 s⁻¹ zu berücksichtigen. Die Steigung m zwischen Messpunkten wurde nach der folgenden Gleichung berechnet: m = Δ τ / Δ γ̇. Der den genannten Schergeschwindigkeitsbereichen zugewiesene Mittelwert der Steigung der Fließkurve errechnet sich aus den Mittelwerten der Steigungen zwischen den einzelnen Messpunkten in dem genannten Bereich der Schergeschwindigkeiten.

Besonders geeignete erfindungsgemäße Beschichtungsmassen enthalten
a) mindestens ein polymeres organisches Acrylat-basiertes Bindemittel auf Dispersionsbasis, bei dem die polymeren organischen Acrylate des Bindemittels auf Dispersionsbasis Reinacrylate darstellen,
b) mindestens eine Base, umfassend oder bestehend aus Kaliumwasserglas,
c) mindestens einen Polysaccharid-Verdicker, insbesondere Xanthan-Gum, als Rheologiemodifizierungsmittel,
d) mindestens einen die Lagerfähigkeit der wässrigen Beschichtungsmasse steigernden Stabilisator, umfassend oder bestehend aus mindestens einer wasserlöslichen organischen Stickstoffverbindung, ausgewählt aus der Gruppe bestehend aus Verbindungen mit einer, zwei oder mehr Ammoniumgruppen, insbesondere quartären Ammoniumgruppen, Alkylendiamintetracarboxylsäure, insbesondere Ethylendiamintetraessigsäure, Salzen der Alkylendiamintetracarboxylsäure, insbesondere Salzen der Ethylendiamintetraessigsäure, Alkylendiamintetracarboxlat, insbesondere Ethylendiamintetraacetat, alkoxyliertes, insbesondere propoxyliertes, Tetraalkylalkylendiamin, insbesondere Tetraalkylethylendiamin, Tetrahydroxyalkylalkylendiamin, insbesondere N,N,N',N'-Tetrakis-(2-hydroxypropyl)-ethylendiamm, alkoxyliertem, insbesondere ethoxyliertem oder propoxyliertem, (N,N')-Tetraalkylalkylendiamin, insbesondere (N,N')-Tetraalkylethylendiamin, und beliebigen Mischungen hiervon,
e) mindestens ein Additiv, enthaltend einen Polyethersiloxan-basierten, vorzugsweise kieselsäurehaltigen, Entschäumer,
f) gegebenenfalls mindestens einen Füllstoff und/oder mindestens ein Pigment,
g) Titandioxid mit einer mittleren, insbesondere absoluten, Partikelgröße kleiner oder gleich 5 µm als anorganisches UV- Lichtschutzmittel und/oder HALS-(Hindered amine light stabilizers)-Lichtschutzmittel als organische UV- Lichtschutzmittel,
h) mindestens ein polymeres organisches Polyuethan-basierte Bindemittel auf Dispersionsbasis, das vorzugsweise frei von organischen Lösemitteln ist,
i) mindestens ein Polysiloxan-basiertes Hydrophobierungsmittel,
j) mindestens ein Netzmittel, enthaltend oder bestehend aus ethoxylierten Fettalkoholen, und gegebenenfalls mindestens ein Dispergiermittel
k) gegebenenfalls mindestens ein Mattierungsmittel und
l) gegebenenfalls mindestens einen Wachs, insbesondere zugegeben in Form einer wässrigen Wachsemulsion,

Weitere zweckmäßige Ausführungsformen erfindungsgemäßer wässriger Beschichtungsmasse enthalten
1 bis 30 Gew.%, vorzugsweise 5 bis 25 Gew.% und besonders bevorzugt 10 bis 20 Gew. % an dem polymeren Acrylat-basierten Bindemittel a) (Feststoffanteil) und/oder
0,1 bis 3,0 Gew.%, bevorzugt 0,4 bis 2,5 Gew. % und besonders bevorzugt 0,7 bis 2,0 Gew. % an Base b) (Feststoffanteil) und/oder
0,01 bis 3,0 Gew.%, bevorzugt 0,1 bis 2,0 Gew.-% und besonders bevorzugt 0,2 bis 1,5 Gew.% Rheologiemodifizierungsmittel c), insbesondere Verdicker, (Feststoffanteil),
0,01 bis 2,0 Gew. %, bevorzugt 0,05 bis 1,5 Gew.% und besonders bevorzugt 0,1 bis 1,0 Gew.% an Stabilisator d) (Feststoffanteil) und/oder
0,01 bis 4,0 Gew.%, bevorzugt 0,05 bis 3,0 Gew.% und besonders bevorzugt 0,1 bis 2,5 Gew.% an Additiven e) (Feststoffanteil) und/oder
0 bis 6 Gew.%, bevorzugt 0 bis 4 Gew.-% und besonders bevorzugt 0 bis 2 Gew.%, Mattierungsmittel und/oder Pigmente,
0 bis 14 Gew.%, vorzugsweise 0 bis 11 Gew.% und besonders bevorzugt 0,5 bis 8 Gew.%, Füllstoffe,
0 bis 4 Gew.%, bevorzugt 0,01 bis 3 Gew.-% und besonders bevorzugt 0,1 bis 2 Gew.%, organisches und/oder anorganisches Lichtschutzmittel g) (Feststoffanteil),
0 bis 5 Gew.%, bevorzugt 0,05 bis 4 Gew.-% und besonders bevorzugt 0,1 bis 3 Gew.%, mindestens eines polymeren organischen Polyuethan-basierten Bindemittels h) auf Dispersionsbasis,
0 bis 4 Gew.%, bevorzugt 0,01 bis 3 Gew.-% und besonders bevorzugt 0,05 bis 2 Gew.% Hydrophobierungsmittel i) (Feststoffanteil), insbesondere Kaliummethylsiliconat und/oder Kalium methylsilantriolat, und/oder
0 bis 2 Gew.%, bevorzugt 0,001 bis 1,5 Gew. % und besonders bevorzugt 0,01 bis 1,0 Gew. % an Dispergiermittel und/oder Netzmittel j) (Feststoffanteil) und/oder
0,0 bis 5 Gew.%, bevorzugt 0,01 bis 4Gew.%, besonders bevorzugt 0,1 bis 3 Gew.% Wachs 1) (Feststoffanteil), und/oder
40 bis 85 Gew.%, vorzugsweise 50 bis 80 Gew.% und besonders bevorzugt 55 bis 70 Gew. % an Wasser,
jeweils bezogen auf das Gesamtgewicht der Beschichtungsmasse, wobei die die Beschichtungsmasse bildenden Komponenten stets 100 Gew.% ergeben.

Die der Erfindung zugrunde liegende Aufgabe wird des Weiteren gelöst durch ein Beschichtungssystem, insbesondere Lasurbeschichtungssystem, enthaltend oder gebildet aus mindestens einer erfindungsgemäßen Beschichtungsmasse und mindestens einer wässrigen Farbtonpaste. Die erfindungsgemäßen Beschichtungsmasse können hierbei die Basisrezeptur bilden, die mit einer Vielzahl an unterschiedlichen Farbtönen abgewöhnt werden kann. Die erfindungsgemäßen Beschichtungsmasse kann dabei zum Beispiel als transparente, weiße, zum Beispiel enthalten Titandioxid, oder eingefärbte Basisrezeptur, zum Beispiel enthaltend Eisenglimmer, verwendet werden.

Die der Erfindung zu Grunde liegende Aufgabe wird des Weiteren gelöst durch eine erfindungsgemäße Beschichtung, insbesondere Lasur-Beschichtung, erhalten oder erhältlich aus einer erfindungsgemäßen Beschichtungsmasse oder aus einem erfindungsgemäßen Beschichtungssystem. Die erfindungsgemäßen Beschichtungen verfügen dabei vorzugsweise über eine durchschnittliche Trockenschichtdicke im Bereich von größer 0 bis 100 µm, bevorzugt im Bereich von größer 0 bis 50 µm und besonders bevorzugt im Bereich von größer 0 bis 30 µm.

Auch wird die der Erfindung zu Grunde liegende Aufgabe gelöst durch ein Substrat enthaltend eine beschichtbare Oberfläche und auf dieser beschichtbaren Oberfläche eine erfindungsgemäße Beschichtung. Als geeignete Substrate kommen zum Beispiel Holz oder Holzwerkstoffe, Putze, Tapeten, Leinwände, Farbanstriche, Papier oder Karton, insbesondere Holz oder Holzwerkstoffe in Betracht.

Schließlich wird die der Erfindung zu Grunde liegende Aufgabe gelöst durch Kit-of-Parts für ein Beschichtungssystem, insbesondere ein erfindungsgemäßes Beschichtungssystem, umfassend mindestens eine erfindungsgemäße Beschichtungsmasse und mindestens eine wässrige Farbtonpaste.

Die erfindungsgemäßen Beschichtungsmassen, das erfindungsgemäße Beschichtungssystem wie auch das erfindungsgemäße Kit-of-Parts können demgemäß eingesetzt werden für die, insbesondere lasierende, Beschichtung von Substratoberflächen, vorzugsweise im Außenbereich.

Mit den erfindungsgemäßen Beschichtungsmassen lassen sich überraschenderweise langzeitlagerstabile Lasur-Beschichtungen erhalten, ohne hierfür auf biozid wirkende Topfkonservierungsmittel zurückgreifen zu müssen. Die erfindungsgemäßen Beschichtungsmassen sind überdies regelmäßig extrem wasserabweisend sowie weitestgehend resistent gegen UV-Strahlung und zeichnen sich demgemäß durch eine ausgeprägte Wetterstabilität aus. Die erfindungsgemäßen Beschichtungsmassen können folglich ohne weiteres auch für Außenanwendungen vorgesehen werden. Dies gilt insbesondere auch für Lasuren mit mattem Erscheinungsbild. Von besonderem Vorteil ist auch, dass die erfindungsgemäßen Beschichtungen dabei gleichzeitig Konservierungsmittel frei und Lösungsmittel frei sein können. Die erfindungsgemäßen Beschichtungsmasse verfügen auch ohne Konservierungsmittel über ein hohes Maß an Resistenz gegenüber mikrobiellem Befall, im Topf. Die mit den erfindungsgemäßen Beschichtungsmassen erhaltenen Beschichtungen sind regelmäßig raumlufthygienisch unbedenklich. Unter anwendungstechnischen Gesichtspunkten ist überdies von Vorteil, dass sich die erfindungsgemäßen Beschichtungsmassen mit einer Vielzahl an Farbtonzusammensetzungen abtönen lassen.

Die in der voranstehenden Beschreibung und den Ansprüchen offenbarten Merkmale der Erfindung können sowohl einzeln als auch in jeder beliebigen Kombination für die Verwirklichung der Erfindung vorteilhaft sein.

## Patentansprüche

1. Wässrige, im Wesentlichen organische Topfkonservierungsmittel-freie Beschichtungsmasse, insbesondere wässrige Lasur-Beschichtungsmasse,
mit einem pH-Wert im Bereich von 10,0 bis 12,0, insbesondere im Bereich von 10,5 bis 11,5, oder eingestellt auf einen pH-Wert im Bereich von 10,0 bis 12,0, insbesondere im Bereich von 10,5 bis 11,5, enthaltend oder bestehend aus
a) mindestens einem polymeren organischen Acrylat-basierten Bindemittel auf Dispersionsbasis,
b) mindestens einer Base,
c) mindestens einem Rheologiemodifizierungsmittel, insbesondere Verdicker,
d) mindestens einem die Lagerfähigkeit der wässrigen Beschichtungsmasse steigernden Stabilisator, umfassend oder bestehend aus mindestens einer wasserlöslichen organischen Stickstoffverbindung, und
e) mindestens einem Additiv.

2. Beschichtungsmasse nach Anspruch 1, ferner umfassend
f) mindestens einen Füllstoff und/oder mindestens ein Pigment,
g) mindestens ein organisches und/oder anorganisches Lichtschutzmittel, insbesondere UV-Lichtschutzmittel,
h) mindestens eine polymeres organisches Polyurethan-basiertes Bindemittel auf Dispersionsbasis,
i) mindestens ein Hydrophobierungsmittel,
j) mindestens ein Dispergiermittel und/oder mindestens ein Netzmittel, insbesondere mindestens ein Dispergiermittel,
k) mindestens ein Mattierungsmittel und/oder
1) mindestens einen Wachs, insbesondere zugegeben in Form einer wässrigen Wachsemulsion.

3. Beschichtungsmasse nach Anspruch 1 oder 2, **dadurch gekennzeichnet, dass** die wasserlösliche organische Stickstoffverbindung j) ausgewählt ist aus der Gruppe bestehend aus Verbindungen mit einer, zwei oder mehr Ammoniumgruppen, insbesondere quartären Ammoniumgruppen, Alkylendiamintetracarboxylsäure, insbesondere Ethylendiamintetraessigsäure, Salzen der Alkylendiamintetracarboxylsäure, insbesondere Salzen der Ethylendiamintetraessigsäure, Alkylendiamintetracarboxlat, insbesondere Ethylendiamintetraacetat, alkoxyliertes, insbesondere propoxyliertes, Tetraalkylalkylendiamin, insbesondere Tetraalkylethylendiamin, Tetrahydroxyalkylalkylendiamin, insbesondere N,N,N',N'-Tetrakis-(2-hydroxypropyl)-ethylendiamin, alkoxyliertem, insbesondere ethoxyliertem oder propoxyliertem, (N,N')-Tetraalkylalkylendiamin, insbesondere (N,N')-Tetraalkylethylendiamin, und beliebigen Mischungen hiervon.

4. Beschichtungsmasse nach einem der vorangehenden Ansprüche, **dadurch gekennzeichnet, dass**
das mindestens eine Additiv e) Entschäumer, Flammschutzmittel, Filmbildehilfsmittel oder beliebige Mischungen hiervon umfasst und/oder dass die Base b) ausgewählt ist aus der Gruppe bestehend aus Wasserglas, insbesondere Kaliumwasserglas, Kieselsol, Alkalihydroxiden und beliebigen Mischungen hiervon und/oder dass
die polymeren organischen Acrylate des Bindemittels auf Dispersionsbasis Reinacrylate umfassen oder darstellen, insbesondere ausgewählt aus der Gruppe bestehend aus Homopolymeren gebildet aus Meth)acrylaten, Copolymeren gebildet aus (Meth)acrylaten, Copolymeren gebildet aus (Meth)acrylaten und (Meth)acrylsäure und deren Mischungen.

5. Beschichtungsmasse nach einem der vorangehenden Ansprüche, **dadurch gekennzeichnet, dass**
diese als im Wesentlichen frei von organischen Topfkonservierungsmitteln anzusehen ist, wenn darin organische Topfkonservierungsmittel, jeweils bezogen auf das individuelle Topfkonservierungsmittel, in Mengen von nicht mehr als 100 ppm, bevorzugt von nicht mehr als 50 ppm, besonders bevorzugt von nicht mehr als 2 ppm und in Bezug auf 5-Chloro-2-methyl-4-isothiazolin (CIT) in Mengen von weniger als 0,5 ppm, nach Maßgabe der "Vergabegrundlage für Umweltzeichen" der RAL gGmbH für "Emissionsarme Innenwandfarben RAL-UZ 102" (Ausgabe Januar 2015), enthalten sind, und insbesondere, wenn in den Beschichtungsmassen keine organischen Topfkonservierungsmittel vorliegen.

6. Beschichtungsmasse nach einem der vorangehenden Ansprüche, **dadurch gekennzeichnet, dass**
diese Beschichtungsmassen Topfkonservierungsmittel und Filmkonservierungsmittel, insbesondere organische Biozide, in Mengen von nicht mehr als 100 ppm, vorzugsweise von nicht mehr als 50 ppm, besonders bevorzugt von nicht mehr als 2 ppm und in Bezug auf 5-Chloro-2-methyl-4-isothiazolin (CIT) in Mengen von weniger als 0,5 ppm, nach Maßgabe der "Vergabegrundlage für Umweltzeichen" der RAL gGmbH für "Emissionsarme Innenwandfarben RAL-UZ 102" (Ausgabe Januar 2015), enthalten, und insbesondere in diesen Beschichtungsmassen keine Topfkonservierungsmittel und keine Filmkonservierungsmittel, insbesondere keine organischen Biozide, vorliegen.

7. Beschichtungsmasse nach einem der vorangehenden Ansprüche, **dadurch gekennzeichnet, dass**
diese weniger als 1 g/l, bevorzugt weniger als 500 mg/l und besonders bevorzugt weniger als 300 mg/l an organischen Lösungsmitteln enthält.

8. Beschichtungsmasse nach einem der vorangehenden Ansprüche, **dadurch gekennzeichnet, dass**
der Verdicker ausgewählt ist aus der Gruppe bestehend aus Polyacrylat-Verdickern, Polyurethan-Verdickern, Polyharnstoff-Verdickern, Polysaccharid-Verdickern, insbesondere Xanthan-Gum, Cellulose-Verdickern, insbesondere Hydroxyethylcellulose und/oder Methylcellulose, Polyvinylalkohol-Verdickern, Polyetherpolyol-Verdickern, und beliebigen Mischungen hiervon und/oder dass das Mattierungsmittel ausgewählt ist aus der Gruppe bestehend aus Kieselsäure, insbesondere Fällungskieselsäure, Aluminiumnatriumsalzen, Diatomene, Kaolin und beliebigen Mischungen hiervon und/oder dass
das Hydrophobierungsmittel ausgewählt ist aus der Gruppe bestehend aus Alkylakoxysilanen, Alkylalkoxysiloxanen, wasserlöslichen Alkysilikonaten, Monoalkylsilantriol, Dialkylsilandiol, Trialkylsilanol, den Alkalisalzen von Monoalkylsilantriol, Dialkylsilandiol und Trialkylsilanol, und beliebigen Mischungen hiervon und insbesondere Kaliummethylsilikonat, Kaliummethylsilantriolat und/oder Kaliumethylsilantriolat darstellt.

9. Beschichtungsmasse nach einem der vorangehenden Ansprüche, enthaltend
1 bis 30 Gew.%, vorzugsweise 5 bis 25 Gew.% und besonders bevorzugt 10 bis 20 Gew. % an dem polymeren Acrylat-basierten Bindemittel a) (Feststoffanteil) und/oder
0,1 bis 3,0 Gew.%, bevorzugt 0,4 bis 2,5 Gew. % und besonders bevorzugt 0,7 bis 2,0 Gew. % an Base b) (Feststoffanteil) und/oder
0,01 bis 3,0 Gew.%, bevorzugt 0,1 bis 2,0 Gew.-% und besonders bevorzugt 0,2 bis 1,5 Gew.% Rheologiemodifizierungsmittel c), insbesondere Verdicker, (Feststoffanteil),
0,01 bis 2,0 Gew. %, bevorzugt 0,05 bis 1,5 Gew.% und besonders bevorzugt 0,1 bis 1,0 Gew.% an Stabilisator d) (Feststoffanteil) und/oder
0,01 bis 4,0 Gew.%, bevorzugt 0,05 bis 3,0 Gew.% und besonders bevorzugt 0,1 bis 2,5 Gew.% an Additiven e) (Feststoffanteil) und/oder
0 bis 6 Gew.%, bevorzugt 0 bis 4 Gew.-% und besonders bevorzugt 0 bis 2 Gew.%, Mattierungsmittel und/oder Pigmente,
0 bis 14 Gew.%, vorzugsweise 0 bis 11 Gew.% und besonders bevorzugt 0,5 bis 8 Gew.%, Füllstoffe,
0 bis 4 Gew.%, bevorzugt 0,01 bis 3 Gew.-% und besonders bevorzugt 0,1 bis 2 Gew.%, organisches und/oder anorganisches Lichtschutzmittel g) (Feststoffanteil),
0 bis 5 Gew.%, bevorzugt 0,05 bis 4 Gew.-% und besonders bevorzugt 0,1 bis 3 Gew.%, mindestens eines polymeren organischen Polyuethan-basierten Bindemittels h) auf Dispersionsbasis,
0 bis 4 Gew.%, bevorzugt 0,01 bis 3 Gew.-% und besonders bevorzugt 0,05 bis 2 Gew.% Hydrophobierungsmittel i) (Feststoffanteil), insbesondere Kaliummethylsiliconat und/oder Kaliummethylsilantriolat, und/oder
0 bis 2 Gew.%, bevorzugt 0,001 bis 1,5 Gew. % und besonders bevorzugt 0,01 bis 1,0 Gew. % an Dispergiermittel und/oder Netzmittel j) (Feststoffanteil) und/oder
0,0 bis 5 Gew.%, bevorzugt 0,01 bis 4 Gew.%, besonders bevorzugt 0,1 bis 3 Gew.% Wachs l) (Feststoffanteil), und/oder
40 bis 85 Gew.%, vorzugsweise 50 bis 80 Gew.% und besonders bevorzugt 55 bis 70 Gew. % an Wasser,
jeweils bezogen auf das Gesamtgewicht der Beschichtungsmasse, wobei die die Beschichtungsmasse bildenden Komponenten stets 100 Gew.% ergeben.

10. Beschichtungsmasse nach einem der Ansprüche 2 bis 9, enthaltend Mattierungsmittel und/oder Pigmente in einer Gesamtmenge nicht oberhalb von 6 Gew.%, vorzugsweise nicht oberhalb von 4 Gew.% und besonders bevorzugt nicht oberhalb von 2 Gew.%, bezogen auf das Gesamtgewicht der Beschichtungsmasse und/oder
Füllstoffe in einer Menge im Bereich von 0 bis 14 Gew.%, vorzugsweise im Bereich von 0 bis 11 Gew.% und besonders bevorzugt im Bereich von 0,5 bis 8 Gew.%, bezogen auf das Gesamtgewicht der Beschichtungsmasse.

11. Beschichtungsmasse nach einem der vorangehenden Ansprüche, enthaltend
a) mindestens ein polymeres organisches Acrylat-basiertes Bindemittel auf Dispersionsbasis, bei dem die polymeren organischen Acrylate des Bindemittels auf Dispersionsbasis Reinacrylate darstellen,
b) mindestens eine Base, umfassend oder bestehend aus Kaliumwasserglas,
c) mindestens einen Polysaccharid-Verdicker, insbesondere Xanthan-Gum, als Rheologiemodifizierungsmittel,
d) mindestens einen die Lagerfähigkeit der wässrigen Beschichtungsmasse steigernden Stabilisator, umfassend oder bestehend aus mindestens einer wasserlöslichen organischen Stickstoffverbindung, ausgewählt aus der Gruppe bestehend aus Verbindungen mit einer, zwei oder mehr Ammoniumgruppen, insbesondere quartären Ammoniumgruppen, Alkylendiamintetracarboxylsäure, insbesondere Ethylendiamintetraessigsäure, Salzen der Alkylendiamintetracarboxylsäure, insbesondere Salzen der Ethylendiamintetraessigsäure, Alkylendiamintetracarboxlat, insbesondere Ethylendiamintetraacetat, alkoxyliertes, insbesondere propoxyliertes, Tetraalkylalkylendiamin, insbesondere Tetraalkylethylendiamin, Tetrahydroxyalkylalkylendiamin, insbesondere N,N,N',N'-Tetrakis-(2-hydroxypropyl)-ethylendiamin, alkoxyliertem, insbesondere ethoxyliertem oder propoxyliertem, (N,N')-Tetraalkylalkylendiamin, insbesondere (N,N')-Tetraalkylethylendiamin, und beliebigen Mischungen hiervon,
e) mindestens ein Additiv, enthaltend einen Polyethersiloxan-basierten, vorzugsweise kieselsäurehaltigen, Entschäumer,
f) gegebenenfalls mindestens einen Füllstoff und/oder mindestens ein Pigment,
g) Titandioxid mit einer mittleren, insbesondere absoluten, Partikelgröße kleiner oder gleich 5 µm als anorganisches UV- Lichtschutzmittel und/oder HALS-(Hindered amine light stabilizers)-Lichtschutzmittel als organische UV- Lichtschutzmittel,
h) mindestens ein polymeres organisches Polyuethan-basierte Bindemittel auf Dispersionsbasis, das vorzugsweise frei von organischen Lösemitteln ist,
i) mindestens ein Polysiloxan-basiertes Hydrophobierungsmittel,
j) mindestens ein Netzmittel, enthaltend oder bestehend aus ethoxylierten Fettalkoholen, und gegebenenfalls mindestens ein Dispergiermittel
k) gegebenenfalls mindestens ein Mattierungsmittel und
l) gegebenenfalls mindestens einen Wachs, insbesondere zugegeben in Form einer wässrigen Wachsemulsion.

12. Beschichtungsmasse nach einem der vorangehenden Ansprüche, **dadurch gekennzeichnet, dass**
das Dispergiermittel mindestens ein polyanionisches Dispergiermittel umfasst, insbesondere ausgewählt aus der Gruppe bestehend aus Polycarboxylaten, insbesondere Salze von Polyacrylsäuren, Polyphosphaten, insbesondere lineare Polyphosphate und/oder zyklische Metaphosphate, und beliebigen Mischungen hiervon, vorzugsweise Salzen von Polyacrylsäuren.

13. Beschichtungssystem, insbesondere Lasurbeschichtungssystem, enthaltend oder gebildet aus
mindestens einer Beschichtungsmasse nach einem der vorangehenden Ansprüche und mindestens einer wässrigen Farbtonpaste.

14. Beschichtung, insbesondere Lasur-Beschichtung, erhalten oder erhältlich aus einer Beschichtungsmasse nach einem der Ansprüche 1 bis 12 oder aus einem Beschichtungssystem nach Anspruch 13.

15. Substrat enthaltend eine beschichtbare Oberfläche und auf dieser beschichtbaren Oberfläche eine Beschichtung nach Anspruch 14.

16. Kit-of-Parts für ein Beschichtungssystem, insbesondere nach Anspruch 13, umfassend mindestens eine Beschichtungsmasse nach einem der Ansprüche 1 bis 12 und mindestens eine Farbtonpaste, insbesondere eine Vielzahl an wässrigen Farbtonpasten.

17. Verwendung der Beschichtungsmasse nach einem der Ansprüche 1 bis 12 oder des Beschichtungssystems nach Anspruch 13 oder des Kit-of-Parts nach Anspruch 16 für die, insbesondere lasierende, Beschichtung von Substratoberflächen, vorzugsweise im Außenbereich.

## Claims

1. An aqueous, substantially organic in-can preservative-free coating composition, in particular an aqueous low-pigment coating composition, with a pH value in the range from 10.0 to 12.0, in particular in the range from 10.5 to 11.5, or adjusted to a pH value in the range from 10.0 to 12.0, in particular in the range from 10.5 to 11.5. containing or consisting of
a) at least one polymeric organic acrylate-based binder on a dispersion basis,
b) at least one base,
c) at least one rheology modifier, in particular thickener,
d) at least one stabilizer which increases the storage life of the aqueous coating composition and comprises or consists of at least one water-soluble organic nitrogen compound, and
e) at least one additive.

2. The coating composition according to Claim 1, further comprising
f) at least one filler and/or at least one pigment,
g) at least one organic and/or inorganic light stabilizer, in particular UV light stabilizer,
h) at least one polymeric organic polyurethane-based binder on a dispersion basis,
i) at least one hydrophobing agent,
j) at least one dispersant and/or at least one wetting agent, in particular at least one dispersant,
k) at least one matting agent and/or
1) at least one wax, in particular added in the form of an aqueous wax emulsion.

3. The coating composition according to Claim 1 or 2, **characterized in that** the water-soluble organic nitrogen compound j) is selected from the group consisting of compounds with one, two or more ammonium groups, in particular quaternary ammonium groups, alkylenediaminetetracarboxylic acid, in particular ethylenediaminetetraacetic acid, salts of alkylenediaminetetracarboxylic acid, in particular salts of ethylenediaminetetraacetic acid, alkylenediaminetetracarboxylate, in particular ethylenediaminetetraacetate, alkoxylated, in particular propoxylated, tetraalkylalkylenediamine, in particular tetraalkylethylenediamine, tetrahydroxyalkylalkylenediamine, in particular N,N,N',N'-tetrakis(2-hydroxypropyl)ethylenediamine, alkoxylated, in particular ethoxylated or propoxylated, (N,N')-tetraalkylalkylenediamine, in particular (N,N')-tetraalkylethylenediamine, and any mixtures thereof.

4. The coating composition according to any one of the preceding claims, **characterized in that**
the at least one additive e) comprises defoamers, flame retardants, film-forming aids or any mixtures thereof and/or **in that** the base b) is selected from the group consisting of water glass, in particular potassium water glass, silica sol, alkali metal hydroxides and any mixtures thereof and/or **in that**
the polymeric organic acrylates of the binder on a dispersion basis comprise or constitute pure acrylates, in particular selected from the group consisting of homopolymers formed from (meth)acrylates, copolymers formed from (meth)acrylates, copolymers formed from (meth)acrylates and (meth)acrylic acid and mixtures thereof.

5. The coating composition according to any one of the preceding claims, **characterized in that**
said composition should be deemed to be substantially free of organic in-can preservatives if it contains organic in-can preservatives, in each case based on the individual in-can preservative, in quantities of no more than 100 ppm, preferably of no more than 50 ppm, particularly preferably of no more than 2 ppm and, in respect of 5-chloro-2-methyl-4-isothiazoline (CIT), in quantities of less than 0.5 ppm, in line with the basic award criteria of the environmental label ("Vergabegrundlage für Umweltzeichen") published by RAL gGmbH for low-emission interior wall paints of standard RAL-UZ 10 ("Emissionsarme Innenwandfarben RAL-UZ 102" (January 2015 edition), and in particular, if no organic in-can preservatives are present in the coating compositions.

6. The coating composition according to any one of the preceding claims, **characterized in that**
said coating compositions contain in-can preservatives and film preservatives, in particular organic biocides, in quantities of no more than 100 ppm, preferably of no more than 50 ppm, particularly preferably of no more than 2 ppm and, in respect of 5-chloro-2-methyl-4-isothiazoline (CIT), in quantities of less than 0.5 ppm, in line with the basic award criteria of the environmental label ("Vergabegrundlage für Umweltzeichen") published by RAL gGmbH for low-emission interior wall paints of standard RAL-UZ 10 ("Emissionsarme Innenwandfarben RAL-UZ 102"(January 2015 edition), and in particular no in-can preservatives and no film preservatives, in particular no organic biocides, are present in said coating compositions.

7. The coating composition according to any one of the preceding claims, **characterized in that**
said composition contains less than 1 g/l, preferably less than 500 mg/l and particularly preferably less than 300 mg/l of organic solvents.

8. The coating composition according to any one of the preceding claims, **characterized in that**
the thickener is selected from the group consisting of polyacrylate thickeners, polyurethane thickeners, polyurea thickeners, polysaccharide thickeners, in particular xanthan gum, cellulose thickeners, in particular hydroxyethylcellulose and/or methylcellulose, polyvinyl alcohol thickeners, polyether polyol thickeners, and any mixtures thereof and/or **in that** the matting agent is selected from the group consisting of silica, in particular precipitated silica, aluminum-sodium salts, diatomea, kaolin and any mixtures thereof and/or **in that**
the hydrophobing agent is selected from the group consisting of alkylalkoxysilanes, alkylalkoxysiloxanes, water-soluble alkyl siliconates, monoalkylsilanetriol, dialkylsilanediol, trialkylsilanol, the alkali metal salts of monoalkylsilanetriol, dialkylsilanediol and trialkylsilanol, and any desired mixtures thereof and in particular constitutes potassium methyl siliconate, potassium methylsilanetriolate and/or potassium ethylsilanetriolate.

9. The coating composition according to any one of the preceding claims, containing
1 to 30 wt.%, preferably 5 to 25 wt.% and particularly preferably 10 to 20 wt.% of the polymeric acrylate-based binder a) (solids content) and/or
0.1 to 3.0 wt.%, preferably 0.4 to 2.5 wt.% and particularly preferably 0.7 to 2.0 wt.% of base b) (solids content) and/or
0.01 to 3.0 wt.%, preferably 0.1 to 2.0 wt.% and particularly preferably 0.2 to 1.5 wt.% of rheology modifier c), in particular thickener, (solids content),
0.01 to 2.0 wt.%, preferably 0.05 to 1.5 wt.% and particularly preferably 0.1 to 1.0 wt.% of stabilizer d) (solids content) and/or
0.01 to 4.0 wt.%, preferably 0.05 to 3.0 wt.% and particularly preferably 0.1 to 2.5 wt.% of additives e) (solids content) and/or
0 to 6 wt.%, preferably 0 to 4 wt.% and particularly preferably 0 to 2 wt.%, of matting agents and/or pigments,
0 to 14 wt.%, preferably 0 to 11 wt.% and particularly preferably 0.5 to 8 wt.%, of fillers,
0 to 4 wt.%, preferably 0.01 to 3 wt.% and particularly preferably 0.1 to 2 wt.%, of organic and/or inorganic light stabilizer g) (solids content),
0 to 5 wt.%, preferably 0.05 to 4 wt.% and particularly preferably 0.1 to 3 wt.%, of at least one polymeric organic polyurethane-based binder h) on a dispersion basis,
0 to 4 wt.%, preferably 0.01 to 3 wt.% and particularly preferably 0.05 to 2 wt.% of hydrophobing agent i) (solids content), in particular potassium methylsiliconate and/or potassium methylsilanetriolate, and/or
0 to 2 wt.%, preferably 0.001 to 1.5 wt.% and particularly preferably 0.01 to 1.0 wt.% of dispersant and/or wetting agent j) (solids content) and/or
0.0 to 5 wt.%, preferably 0.01 to 4 wt.%, particularly preferably 0.1 to 3 wt.% of wax l) (solids content), and/or
40 to 85 wt.%, preferably 50 to 80 wt.% and particularly preferably 55 to 70 wt.% of water,
in each case based on the total weight of the coating composition, wherein the components forming the coating composition always amount to 100 wt.%.

10. The coating composition according any one of Claims 2 to 9, containing
matting agents and/or pigments in a total quantity of no more than 6 wt.%, preferably no more than 4 wt.% and particularly preferably no more than 2 wt.%, based on the total weight of the coating composition and/or
fillers in a quantity in the range from 0 to 14 wt.%, preferably in the range from 0 to 11 wt.% and particularly preferably in the range from 0.5 to 8 wt.%, based on the total weight of the coating composition.

11. The coating composition according to any one of the preceding claims, containing
a) at least one polymeric organic acrylate-based binder on a dispersion basis, in which the polymeric organic acrylates of the binder on a dispersion basis constitute pure acrylates,
b) at least one base comprising or consisting of potassium water glass,
c) at least one polysaccharide thickener, in particular xanthan gum, as rheology modifier,
d) at least one stabilizer which increases the storage life of the aqueous coating composition and comprises or consists of at least one water-soluble organic nitrogen compound, selected from the group consisting of compounds with one, two or more ammonium groups, in particular quaternary ammonium groups, alkylenediaminetetracarboxylic acid, in particular ethylenediaminetetraacetic acid, salts of alkylenediaminetetracarboxylic acid, in particular salts of ethylenediaminetetraacetic acid, alkylenediaminetetracarboxylate, in particular ethylenediaminetetraacetate, alkoxylated, in particular propoxylated, tetraalkylalkylenediamine, in particular tetraalkylethylenediamine, tetrahydroxyalkylalkylenediamine, in particular N,N,N',N'-tetrakis(2-hydroxypropyl)ethylenediamine, alkoxylated, in particular ethoxylated or propoxylated, (N,N')-tetraalkylalkylenediamine, in particular (N,N')-tetraalkylethylenediamine, and any mixtures thereof,
e) at least one additive containing a polyethersiloxane-based defoamer, preferably containing silica,
f) optionally at least one filler and/or at least one pigment,
g) titanium dioxide with an average, in particular absolute, particle size of less than or equal to 5 µm as inorganic UV light stabilizer and/or hindered amine light stabilizer (HALS) as organic UV light stabilizer,
h) at least one polymeric organic polyurethane-based binder on a dispersion basis which is preferably free of organic solvents,
i) at least one polysiloxane-based hydrophobing agent,
j) at least one wetting agent containing or consisting of ethoxylated fatty alcohols, and optionally at least one dispersant,
k) optionally at least one matting agent and
l) optionally at least one wax, in particular added in the form of an aqueous wax emulsion.

12. The coating composition according to any one of the preceding claims, **characterized in that**
the dispersant comprises at least one polyanionic dispersant, in particular selected from the group consisting of polycarboxylates, in particular salts of polyacrylic acids, polyphosphates, in particular linear polyphosphates and/or cyclic metaphosphates, and any mixtures thereof, preferably salts of polyacrylic acids.

13. A coating system, in particular a low-pigment coating system, containing or formed from
at least one coating composition according to any one of the preceding claims and at least one aqueous coloring paste.

14. A coating, in particular a low-pigment coating, obtained or obtainable from the coating composition according to any one of Claims 1 to 12 or from the coating system according to Claim 13.

15. A substrate containing a coatable surface and, on this coatable surface, a coating according to Claim 14.

16. A kit of parts for a coating system, in particular according to Claim 13, comprising at least one coating composition according to any one of Claims 1 to 12 and at least one coloring paste, in particular a plurality of aqueous coloring pastes.

17. Use of the coating composition according to any one of Claims 1 to 12 or of the coating system according to Claim 13 or of the kit of parts according to Claim 16 for, in particular low-pigment, coating of substrate surfaces, preferably in an exterior area.

## Revendications

1. Masse de revêtement aqueuse, sensiblement exempte d'agent conserveur organique en pot, en particulier masse de revêtement lasure aqueuse, avec une valeur pH dans la plage de 10,0 à 12,0, en particulier dans la plage de 10,5 à 11,5, ou ajustée sur une valeur pH dans la plage de 10,0 à 12,0, en particulier dans la plage de 10,5 à 11,5, contenant ou se composant de
a) au moins un liant à base d'acrylates de polymères organiques sur une base de dispersion,
b) au moins une base,
c) au moins un agent de modification de rhéologie, en particulier un agent épaississant,
d) au moins un agent stabilisant augmentant la durée de conservation de la masse de revêtement aqueuse, comprenant ou se composant d'au moins un composé d'azote organique hydrosoluble, et
e) au moins un additif.

2. Masse de revêtement selon la revendication 1, comprenant en outre
f) au moins une charge et/ou au moins un pigment,
g) au moins un agent photo-stabilisant organique et/ou anorganique, en particulier un agent photo-stabilisant aux UV,
h) au moins un liant à base de polyuréthanne polymère organique sur une base de dispersion,
i) au moins un agent hydrophobant,
j) au moins un agent dispersant et/ou au moins un agent mouillant, en particulier au moins un agent dispersant,
k) au moins un agent de matité et/ou
1) au moins une cire, en particulier ajoutée sous la forme d'une émulsion aqueuse de cire.

3. Masse de revêtement selon la revendication 1 ou 2, **caractérisée en ce que** le composé d'azote organique hydrosoluble j) est sélectionné parmi le groupe se composant des composés avec un, deux groupes d'ammonium ou plus, en particulier des groupes d'ammonium quaternaire, un acide alkylediammetétracarboxylique, en particulier un acide éthylènediaminetétraacétique, des sels de l'acide alkylediaminetétracarboxylique, en particulier des sels de l'acide éthylènediaminetétraacétique, un alkylènediaminetétracarboxylate, en particulier un éthylènediaminetétraacétate, une tétraalkylealkylènediamine alcoxylé, en particulier propoxylé, en particulier une tétraalkyleéthylènediamine, une tétrahydroxyalkylealkylènediamine, en particulier une N,N,N',N'-tétrakis-(2-hydroxypropyl)-éthylènediamine, une (N,N')-tétraalkylealkylènediamine alcoxylée, en particulier éthoxylée ou propoxylée, en particulier une (N,N')-tétraalkyleéthylènediamine, et des mélanges quelconques de ceux-ci.

4. Masse de revêtement selon l'une quelconque des revendications précédentes, **caractérisée en ce que**
l'au moins un additif e) comprend un agent antimousse, un agent ignifugeant, un agent de coalescence ou des mélanges quelconques de ceux-ci et/ou **en ce que** la base b) est sélectionné parmi le groupe se composant de silicate de soude, en particulier de silicate de potassium, de silice colloïdale, d'hydroxydes alcalins et de mélanges quelconques de ceux-ci et/ou **en ce que**
les acrylates de polymères organiques du liant organique sur une base de dispersion comprennent ou représentent des acrylates purs, en particulier sélectionné parmi le groupe se composant d'homopolymères formés de (méth)acrylates, de copolymères formés de (méth)acrylates, de copolymères formés de (méth)acrylates et d'acide (méth)acrylique et de leurs mélanges.

5. Masse de revêtement selon l'une quelconque des revendications précédentes, **caractérisée en ce que**
celle-ci doit être considérée comme sensiblement exempte d'agents conserveurs organiques en pot, lorsqu'elle contient des agents conserveurs organiques en pot, respectivement par rapport à l'agent conservateur en pot individuel, dans des quantités non supérieures à 100 ppm, préférablement non supérieures à 50 ppm, particulièrement préférablement non supérieures à 2 ppm et par rapport au 5-chloro-2-méthyl-4-isothiazolin (CIT) dans des quantités inférieures à 0,5 ppm, conformément aux principes d'attribution de l'écolabel (« Vergabegrundlage für Umweltzeichen ») de la société RAL gGmbH pour les peintures des parois intérieures pauvres en émission (« Emissionsarme Innenwandfarben RAL-UZ 102 », édition janvier 2015), et, en particulier, quand il n'y a pas d'agents conserveurs organiques en pot dans les masses de revêtement.

6. Masse de revêtement selon l'une quelconque des revendications précédentes, **caractérisée en ce que**
ces masses de revêtement contiennent des agents conserveurs en pot et des agents conservateurs en film, en particulier des biocides organiques, dans des quantités non supérieures à 100 ppm, de préférence non supérieures à 50 ppm, particulièrement préférablement non supérieures à 2 ppm et par rapport au 5-chloro-2-méthyl-4-isothiazolin (CIT) dans des quantités inférieures à 0,5 ppm, conformément aux principes d'attribution de l'écolabel « Vergabegrundlage für Umweltzeichen » de la société RAL gGmbH pour les peintures des parois intérieures pauvres en émission (« Emissionsarme Innenwandfarben RAL-UZ 102 », édition janvier 2015), et en particulier dans ces masses de revêtement il n'y a pas d'agents conserveurs organiques en pot et pas d'agents conservateurs en film, en particulier pas de biocide organique.

7. Masse de revêtement selon l'une quelconque des revendications précédentes, **caractérisée en ce que**
celle-ci contient moins de 1 g/l, préférablement moins de 500 mg/l et particulièrement préférablement moins de 300 mg/l de solvants organiques.

8. Masse de revêtement selon l'une quelconque des revendications précédentes, **caractérisée en ce que**
l'agent épaississant est sélectionné parmi le groupe se composant d'agents épaississants en polyacrylate, d'agents épaississants en polyuréthanne, d'agents épaississants en polycarbamide, d'agents épaississants en polysaccharide, en particulier la gomme de xanthane, d'agents épaississants en cellulose, en particulier la hydroxyéthylcellulose et/ou la méthylcellulose, d'agents épaississants d'alcool polyvinylique, d'agents épaississants en polyétherpolyol , et des mélanges quelconques de ceux-ci et/ou et ce que l'agent de matité est sélectionné parmi le groupe se composant de silice, en particulier de la silice précipitée, de sels de sodium d'aluminium, de la diatomées, du kaolin et des mélanges quelconques de ceux-ci et/ou **en ce que**
l'agent hydrophobant est sélectionné parmi le groupe se composant d'alkylalkoxysilanes d'alkylalkoxysiloxanes, d'alkylsiliconates hydrosolubles, de monoalkylsilanetriol, de dialkylsilanediol, de trialkylsilanol, de sels alcalins de monoalkylsilanetriol, de dialkylsilanediol et de trialkylsilanol, et des mélanges quelconques de ceux-ci et représente en particulier un méthylsiliconate de potassium, un méthylsilanetriolate de potassium et/ou un éthylsilanetriolate de potassium.

9. Masse de revêtement selon l'une quelconque des revendications précédentes, contenant
1 à 30 % en poids, de préférence 5 à 25 % en poids et particulièrement préférablement 10 à 20 % en poids du liant organique à base d'acrylates de polymères a) (part en matériau solide) et/ou 0,1 à 3,0 % en poids, préférablement 0,4 à 2,5 % en poids et particulièrement préférablement 0,7 à 2,0 % en poids de la base b) (part en matériau solide) et/ou
0,01 à 3,0 % en poids, préférablement 0,1 à 2,0 % en poids et particulièrement préférablement 0,2 à 1,5 % en poids d'agent de modification de rhéologie c), en particulier un agent épaississant, (part en matériau solide),
0,01 à 2,0 % en poids, préférablement 0,05 à 1,5 % en poids et particulièrement préférablement 0,1 à 1,0 % en poids d'agent stabilisant d) (part en matériau solide) et/ou
0,01 à 4,0 % en poids, préférablement 0,05 à 3,0 % en poids et particulièrement préférablement 0,1 à 2,5 % en poids d'additifs e) (part en matériau solide) et/ou 0 à 6 % en poids, préférablement 0 à 4 % en poids et particulièrement préférablement 0 à 2 % en poids d'agent de matité et/ou de pigments,
0 à 14 % en poids, de préférence 0 à 11 % en poids et particulièrement préférablement 0,5 à 8 % en poids de charges,
0 à 4 % en poids, préférablement 0,01 à 3 % en poids et particulièrement préférablement 0,1 à 2 % en poids d'agent photostabilisant organique et/ou anorganique g) (part en matériau solide),
0 à 5 % en poids, préférablement 0,05 à 4 % en poids et particulièrement préférablement 0,1 à 3 % en poids au moins d'un liant à base de polyuréthane de polymères organiques h) sur une base de dispersion,
0 à 4 % en poids, préférablement 0,01 à 3 % en poids et particulièrement préférablement 0,05 à 2 % en poids d'un agent hydrophobant i) (part en matériau solide), en particulier de méthylsiliconate de potassium et/ou de méthylsilanetriolate de potassium, et/ou
0 à 2 % en poids, préférablement 0,001 à 1,5 % en poids et particulièrement préférablement 0,01 à 1,0 % en poids d'agent dispersant et/ou d'agent mouillant j) (part en matériau solide) et/ou
0,0 à 5 % en poids, préférablement 0,01 à 4 % en poids, particulièrement préférablement 0,1 à 3 % en poids de cire 1) (part en matériau solide), et/ou 40 à 85 % en poids, de préférence 50 à 80 % en poids et particulièrement préférablement 55 à 70 % en poids d'eau,
respectivement par rapport au poids total de la masse de revêtement, dans laquelle les constituants formant la masse de revêtement donnent toujours un total de 100 % en poids.

10. Masse de revêtement selon une des revendications 2 à 9, contenant
des agents de matité et/ou des pigments en quantité totale ne dépassant pas 6 % en poids, de préférence ne dépassant pas 4 % en poids et particulièrement préférablement ne dépassant pas 2 % en poids, par rapport au poids total de la masse de revêtement et/ou
des charges en quantité dans la plage de 0 à 14 % en poids, de préférence dans la plage de 0 à 11 % en poids et particulièrement préférablement dans la plage de 0,5 à 8 % en poids, par rapport au poids total de la masse de revêtement.

11. Masse de revêtement selon l'une quelconque des revendications précédentes, contenant
a) au moins un liant à base d'acrylates de polymères organiques sur une base de dispersion, dans laquelle les acrylates de polymères organiques du liant organique sur une base de dispersion représentent des acrylates purs,
b) au moins une base, comprenant ou se composant de silicate de potassium,
c) au moins un agent épaississant de polysaccharide, en particulier une gomme de xanthane, en tant qu'agent de modification de rhéologie,
d) au moins un agent stabilisant augmentant la durée de conservation de la masse de revêtement aqueuse, comprenant ou se composant d'au moins un composé d'azote organique hydrosoluble, sélectionné parmi le groupe se composant des composés avec un deux groupes d'ammonium ou plus, en particulier des groupes d'ammonium quaternaire, un acide alkylediarninetétracarboxylique, en particulier un acide éthylènediaminetétraacétique, des sels de l'acide alkylediaminetétracarboxylique, en particulier des sels de l'acide éthylènediaminetétraacétique, un alkylènediaminetétracarboxylate, en particulier un éthylènediaminetétraacétate, un tétraalkylealkylènediamine alcoxylé, en particulier propoxylé, en particulier une tétraalkyleéthylènediamine, une tétrahydroxyalkylealkylènediamine, en particulier une N,N,N',N'-tétrakis-(2-hydroxypropyl)-éthylènediamine, une (N,N')-tétraalkylalkylènediamine alcoxylée, en particulier éthoxylée ou propoxylée, en particulier une (N,N')-tétraalkyléthylènediamine, et des mélanges quelconques de ceux-ci,
e) au moins un additif, contenant un agent antimousse à base de polyéthersiloxane, de préférence contenant de la silice,
f) éventuellement au moins une charge et/ou au moins un pigment,
g) un dioxyde de titane avec une taille de particule moyenne, en particulier absolue, inférieure ou égale à 5 µm en tant qu'agent photo-stabilisant aux UV anorganique et/ou agent photo-stabilisant HALS (Hindered amine light stabilizers) en tant qu'agent photo-stabilisant aux UV organique,
h) au moins un liant à base de polyuréthanne de polymères organiques sur une base de dispersion qui est de préférence exempte de solvants organiques,
i) au moins un agent hydrophobant à base de polysiloxane,
j) au moins un agent mouillant, contenant ou se composant d'alcool gras éthoxylé, et éventuellement au moins un agent dispersant
k) éventuellement au moins un agent de matité et
l) éventuellement au moins une cire, en particulier ajoutée sous la forme d'une émulsion aqueuse de cire.

12. Masse de revêtement selon l'une quelconque des revendications précédentes, **caractérisée en ce que**
l'agent dispersant comprend au moins un agent dispersant polyanionique, en particulier sélectionné parmi le groupe se composant de polycarboxylates, en particulier des sels de poly-acide acrylique, de polyphosphates, en particulier des polyphosphates linéaires et/ou des métaphosphates cycliques, et des mélanges quelconques de ceux-ci, de préférence des sels de poly-acide acrylique.

13. Système de revêtement, en particulier système de revêtement lasure, contenant ou formé de
au moins une masse de revêtement selon l'une quelconque des revendications précédentes et au moins une pâte de couleur aqueuse.

14. Revêtement, en particulier revêtement lasure, obtenu ou pouvant être obtenu à partir d'une masse de revêtement selon l'une quelconque des revendications 1 à 12 ou à partir d'un système de revêtement selon la revendication 13.

15. Substrat contenant une surface qui peut être revêtue et, sur cette surface qui peut être revêtue, un revêtement selon la revendication 14.

16. Ensemble de pièces (Kit-of-Parts) pour un système de revêtement, en particulier selon la revendication 13, comprenant au moins une masse de revêtement selon l'une quelconque des revendications 1 à 12 et au moins une pâte de couleur, en particulier une pluralité de pâtes de couleurs aqueuses.

17. Utilisation de la masse de revêtement selon l'une quelconque des revendications 1 à 12 ou du système de revêtement selon la revendication 13 ou du Kit-of-Parts selon la revendication 16 pour le revêtement, en particulier lasurant, de surfaces de substrat, de préférence en extérieur.
